# EUROPEAN PATENT SPECIFICATION

(11) **EP 3 228 753 B1**
(45) Date of publication and mention of the grant of the patent: **07.10.2020**
(21) Application number: 17153645.1
(22) Date of filing: 27.01.2017
(51) Int. Cl.: E02B 8/02, E02B 3/10, E02B 8/04, E02B 9/06, F04D 3/00, F04B 53/16, F04B 53/22

(54) **MODULAR PRE-FABRICATED WATER CONTROL PUMP SYSTEM**
MODULARES VORGEFERTIGTES WASSERSTEUERUNGSPUMPENSYSTEM
SYSTÈME DE POMPE DE COMMANDE D'EAU PRÉFABRIQUÉ MODULAIRE

(30) Priority: 06.04.2016 DK 201600206
(43) Date of publication of application: 11.10.2017
(73) Proprietor: Wintec Holding ApS, 7330 Brande (DK)
(72) Inventor: BACH, Jens Oliver, 7330 Brande (DK)
(74) Representative: Larsen & Birkeholm A/S

(56) References cited:
- WO-A1-2015/161339
- US-B1- 7 150 290

## Description

### Technical field of the invention

The present invention relates to water control pump systems.

### Background of the invention

Water control pump systems are used for a variety of infrastructure systems, such as the supply of water to canals, the drainage of low-lying land, and the removal of sewage to processing sites.

The frame/foundation of the water control pump system is cast directly at the application site. Hence, the construction time is long, as the cement or other castable material needs to settle and harden before e.g. the pump member can be installed therein. The hardening of the cement or other castable material may be affected by the weather conditions, resulting in a frame/foundation of poor quality and strength. Furthermore, the frame/foundation is susceptible to undermining of the water.

It is therefore desirable to provide a system, which can eliminate some or all of the above problems. US 7 150 290 B discloses a modular pre-fabricated water control pump system according to the preamble of claim 1. WO 2015/161339 A1 also discloses a modular prefab water control system, wherein a plurality of grates are provided in different modules.

### Summary of the invention

One aspect relates to a modular pre-fabricated water control pump system comprising:
a) A first module comprising a first frame comprising:
   i. two side panels;
   ii. a base panel interconnecting the two side panels;
   iii. a front panel comprising a grate adapted for retaining waterborne residues; and
   iv. at least one lifting anchor or coupler adapted for receiving a lifting anchor; and
b) A second module comprising a second frame comprising:
   i. two side panels; and
   ii. a base panel interconnecting the two side panels;
   iii. at least one lifting anchor or coupler adapted for receiving a lifting anchor; and
   iv. pump means.

According to the invention, the modular pre-fabricated water control pump system further comprises a third module comprising:
a. a third frame comprising:
   i. two side panels; and
   ii. a base panel interconnecting the two side panels;
   iii. at least one lifting anchor or coupler adapted for receiving a lifting anchor;
b. one or more sluice gate members; and
c. an actuator adapted for moving the one or more sluice gate members;
wherein the side and/or base panels are adapted for mounting the one or more sluice gate members thereto.

The third module may be an integrated part of the first and/or second modules.
It may be an advantage to have the modules made separately for ease of transportation.
In one or more embodiments, the modular pre-fabricated water control pump system further comprises means for measuring the water level in front of and/or behind the grate and/or the sluice gate member.

In one or more embodiments, the modular pre-fabricated water control pump system further comprises means for measuring the water level in close proximity to the grate and/or the sluice gate member.
In one or more embodiments, the modular pre-fabricated water control pump system further comprises means for measuring the water level of a body of water in liquid communication with said system.

In one or more embodiments, the modular pre-fabricated water control pump system further comprises means for controlling the position of the sluice gate member and the activity of the pump means in response to the water level in close proximity to the grate and/or the sluice gate member. As an example, if the water level downstream to the modular pre-fabricated water control pump system is indicated to exceed a predefined threshold, the means for controlling the position of the sluice gate member and the activity of the pump means closes the sluice gate and activates the pump means. Thereby, the water level may be lowered downstream to the modular pre-fabricated water control pump system, while preventing further water to reach it from the upstream side. The pump means may pump the water back upstream, or to a reservoir - depending on the water level situation upstream to the modular pre-fabricated water control pump system.

In one or more embodiments, the modular pre-fabricated water control pump system further comprises means for controlling the position of the sluice gate member and the activity of the pump means in response to the water level of a body of water in liquid communication with said system. This configuration will allow for a faster response to a rising water level.

The term "modular" is used herein with regard to a structure that is constructed on the basis of a standard pattern or dimensions, and is easily expanded or joined with other like structures.

The term "pre-fabricated" as used throughout this application, means the opposite of fabricated in situ. In other words, the frame is finished as finished structures when shipped to a builder or customer, rather than being poured into temporary forms at the building site or place of use.

In the present context, the term "lifting anchor" should be broadly construed to encompass any such device for lifting the frame with or without grate and/or pump means installed therein. Alternatively, a coupler adapted for receiving a lifting anchor is embedded in the first and/or second frame. The coupler may comprise internal or external threading, depending on the configuration of the lifting anchor.

In one or more embodiments, the lifting anchor or coupler adapted for receiving a lifting anchor is mechanically tied into the reinforcing members embedded in the castable material, such as concrete.

The first and/or the second and/or the third frame may also be made of metal or a castable material. It is to be understood that any suitable castable material, such as cement, mortar, concrete, ceramics, thermoset plastics, and thermoplastics can be used for producing the first frame.

In one or more embodiments, the side and/or base panels are made from a reinforced castable material.

In one or more embodiments, the side and/or base panels are made from a reinforced castable material, and wherein the reinforcement extends beyond the side and/or base panels.

As used herein, the term "reinforced castable material" refers to a castable material into which reinforcement bars or fibres have been cast to carry tensile loads in order to strengthen a structure that would otherwise be brittle.
In one or more embodiments, the first and/or the second frame is a pre-cast reinforced concrete frame.

The first and/or the second and/or the third frame may also be made of metal or a castable material. It is to be understood that any suitable castable material, such as cement, mortar, concrete, ceramics, thermoset plastics, and thermoplastics can be used for producing the first and/or the frame.

The term "pre-cast" as used throughout this application means the opposite of cast in situ. In other words, the pre-cast reinforced concrete frame is finished as finished structures when shipped to a builder or customer, rather than being poured into temporary forms at the building site or place of use.

As used herein, the term "reinforced concrete" refers to concrete into which reinforcement bars or fibres have been cast to carry tensile loads in order to strengthen a structure that would otherwise be brittle.

In one or more embodiments, the lifting anchor or coupler adapted for receiving a lifting anchor is mechanically tied into the reinforcing members embedded in the concrete.

In order to avoid that water will undermine the base panel of the first and/or second and/or third module; it may be an advantage to extend the base panels beyond the side panels, preferably beyond the front, back and outer side/face of the side panel. In one or more embodiments, the base panel of the first and/or second and/or third module extends beyond the side panels.

In one or more embodiments, the base panel of the first and/or second and/or third module extends beyond the front of the side panels.

In one or more embodiments, the base panel of the first and/or second and/or third module extends beyond back of the side panels.

In one or more embodiments, the base panel of the first and/or second and/or third module extends beyond the outer side/face of the side panels.

In one or more embodiments, the base panel of the first and/or second and/or third module extends beyond the front and/or the back and/or the outer side of the side panels.

In one or more embodiments, the part of the base panel of the first and/or second and/or third module extending beyond the side panels comprises channels adapted for receiving an earth anchor.

In one or more embodiments, the reinforcement extends beyond the side and/or base panels of the first and/or second and/or third module.

In one or more embodiments, the reinforcement extends beyond the side panels of the first and/or second and/or third module, preferably beyond the front and back of the side panel. This will allow the pre-fabricated water control pump system to be built into other reinforced concrete structures.

In one or more embodiments, the reinforcement extends beyond the front of the side panels of the first and/or second and/or third module.

In one or more embodiments, the reinforcement extends beyond the back of the side panels of the first and/or second and/or third module.

In one or more embodiments, the reinforcement extends beyond the outer side/face of the side panels of the first and/or second and/or third module.

In one or more embodiments, the reinforcement extends beyond the front and/or the back and/or the outer side of the side panels of the first and/or second and/or third module.

In one or more embodiments, the pre-fabricated water control pump system further comprises means for delivering water and/or compressed air.

In one or more embodiments, the base panel of the first module comprises suction channels adapted to be connected to a source of suction. With or without the function of the air/water channels, the suction channels may be used to remove sediments blocking the function of the grate.

In one or more embodiments, the base panel of the third module comprises suction channels adapted to be connected to a source of suction. With or without the function of the air/water channels, the suction channels may be used to remove sediments blocking the function of the one or more sluice gate members.

In one or more embodiments, the outer face of the side panels of the first and/or second and/or third module each comprise a channel configured for receiving a reinforcement plate adapted for being imbedded in the adjacent dam section.

In one or more embodiments, the pre-fabricated water control pump system further comprises a casing adapted for receiving the first and/or second and/or third module, the casing comprising two side panels and a base panel, wherein the base panel is adapted for supporting the base panel of the first and/or the second frame, and wherein each side panel is adapted for supporting a side panel of the first and/or the second frame. This allows for a system, where the first and/or second and/or third module may be exchanged with a spare module during service.

In one or more embodiments, the casing comprises an opening between its side panels, such that water can flow to and from a first and/or second module according to the present invention positioned within the casing.

In one or more embodiments, the casing comprises a front panel with an opening, and wherein the opening is adapted such that water can flow to a first and/or second module positioned within the casing; and wherein the casing further comprises a back panel with an opening, and wherein the opening is adapted such that water can flow from a first and/or second module positioned within the casing.

In one or more embodiments, the casing comprises a front panel with an opening, and wherein the opening is adapted such that water can flow to a first and/or second and/or third module positioned within the casing.

In one or more embodiments, the casing comprises a back panel with an opening, and wherein the opening is adapted such that water can flow from a first and/or second and/or third module positioned within the casing.

In one or more embodiments, the casing is made of reinforced concrete. In one or more embodiments, the casing is pre-cast.

In one or more embodiments, the casing comprises at least one lifting anchor or coupler adapted for receiving a lifting anchor.

In order to avoid that water will undermine the base panel; it may be an advantage to extend the base panels beyond the side panels, preferably beyond the front, back and outer side/face of the side panel. In one or more embodiments, the base panel extends beyond the side panels.

In one or more embodiments, the base panel of the casing extends beyond the front of the side panels.

In one or more embodiments, the base panel of the casing extends beyond the back of the side panels.

In one or more embodiments, the base panel of the casing extends beyond the outer side/face of the side panels.

In one or more embodiments, the base panel of the casing extends beyond the front and/or the back and/or the outer side of the side panels.

In one or more embodiments, the part of the base panel of the casing extending beyond the side panels comprises channels adapted for receiving an earth anchor.

In one or more embodiments, the reinforcement extends beyond the side panels of the casing, preferably beyond the front and back of the side panel. This will allow the system to be built into other reinforced structures.

In one or more embodiments, the reinforcement extends beyond the front of the side panels of the casing.

In one or more embodiments, the reinforcement extends beyond the back of the side panels of the casing.

In one or more embodiments, the reinforcement extends beyond the outer side/face of the side panels of the casing.

In one or more embodiments, the reinforcement extends beyond the front and/or the back and/or the outer side of the side panels of the casing.

In one or more embodiments, the outer face of the side panels each comprise a channel configured for receiving a reinforcement plate adapted for being imbedded in the adjacent dam section.

A second aspect relates to a module for use in a modular pre-fabricated water control pump system, the module comprising a first frame comprising:
i. two side panels;
ii. a base panel interconnecting the two side panels;
iii. a front panel comprising a grate adapted for retaining waterborne residues; and
iv. at least one lifting anchor or coupler adapted for receiving a lifting anchor.

In one or more embodiments, the base panel extends beyond the side panels, and wherein the part of the base panel extending beyond the side panels comprises channels adapted for receiving an earth anchor.

In one or more embodiments, the outer face of the side panels each comprise a channel configured for receiving a reinforcement plate adapted for being imbedded in the adjacent dam section.

A third aspect relates to a module for use in a modular pre-fabricated water control pump system, the module comprising a second frame comprising:
i. two side panels; and
ii. a base panel interconnecting the two side panels;
iii. at least one lifting anchor or coupler adapted for receiving a lifting anchor; and
iv. pump means.

It should be noted that embodiments and features described in the context of one of the aspects of the present invention also apply to the other aspects of the invention.

### Brief description of the figures

Figure 1 shows a pre-fabricated water control pump system in accordance with various embodiments of the invention;
Figure 2 shows a cross-section through a pre-fabricated water control pump system in accordance with various embodiments of the invention;
Figure 3 shows a bird's eye view of a pre-fabricated water control pump system in accordance with various embodiments of the invention;
Figure 4 shows a third module with two sluice gate members (mitre gate) in accordance with various embodiments of the invention;
Figure 5 shows a third module with one sluice gate member (flap gate) in accordance with various embodiments of the invention;
Figure 6 shows a third module with one sluice gate member (vertical rising gate) in accordance with various embodiments of the invention; and
Figure 7 shows a casing adapted for receiving the pre-cast reinforced concrete frame in accordance with various embodiments of the invention.

### Detailed description of the invention

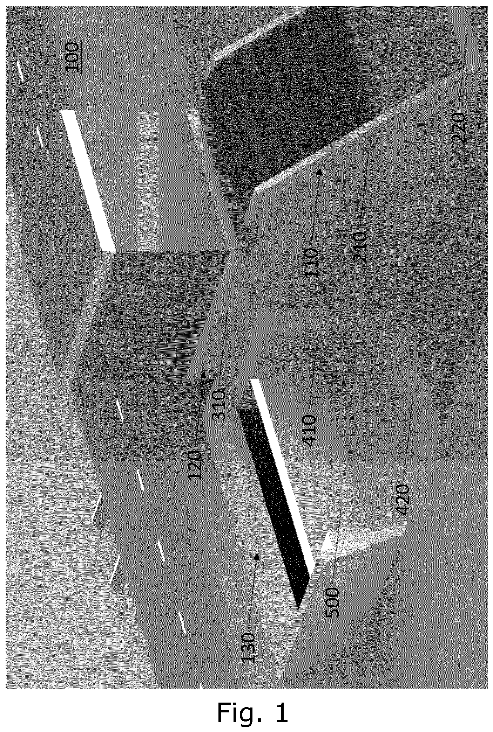

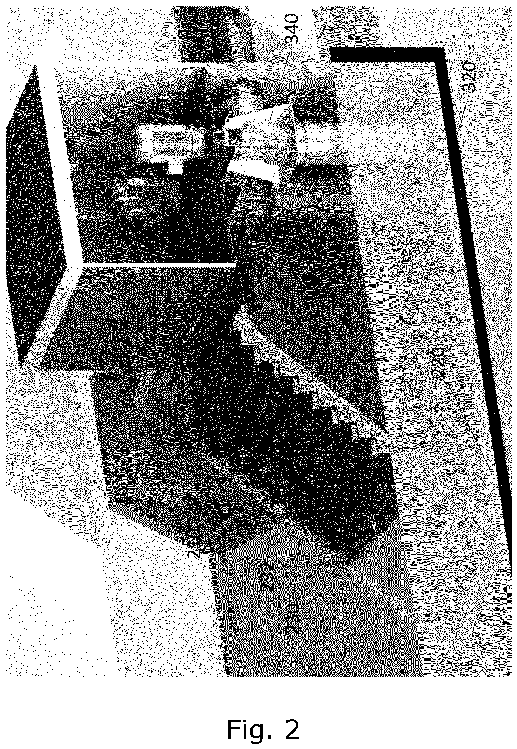

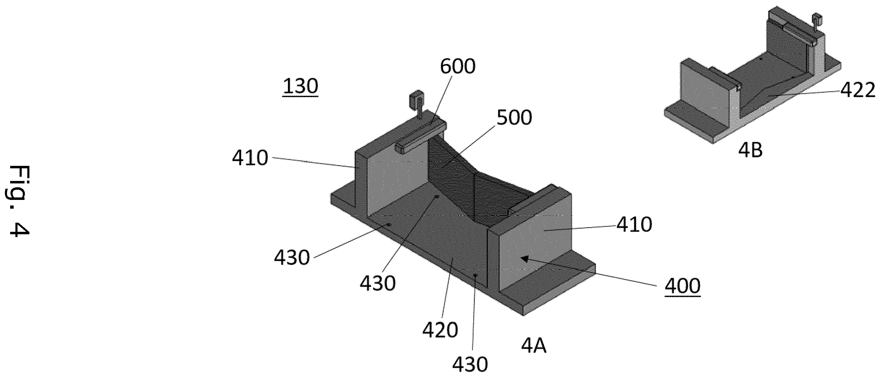

Figure 1 shows a pre-fabricated water control pump system in accordance with various embodiments of the invention. The modular pre-fabricated water control pump system 100 comprises a first 110, a second 120, and a third 130 module. The first module 110 comprising a first frame comprising two side panels 210; a base panel 220 interconnecting the two side panels 210; a front panel 230 (Figure 2) comprising a grate 232 adapted for retaining waterborne residues; and a lifting anchor (not shown) or coupler adapted for receiving a lifting anchor.
The second module 120 comprises a second frame comprising two side panels 310; a base panel 320 (Figure 2) interconnecting the two side panels 310; a lifting anchor (not shown) or coupler adapted for receiving a lifting anchor; and pump means 340 (Figure 2).
The third module 130 comprises a third frame comprising two side panels 410; a base panel 420 interconnecting the two side panels 410; a lifting anchor 430 (Figures 4-7) or coupler adapted for receiving a lifting anchor; one or more sluice gate members 500; and an actuator 600 (Figures 4-7) adapted for moving the one or more sluice gate members. The side 410 and/or base 420 panels are adapted for mounting the one or more sluice gate members 500 thereto.

Figure 2 shows a cross-section through a pre-fabricated water control pump system in accordance with various embodiments of the invention.

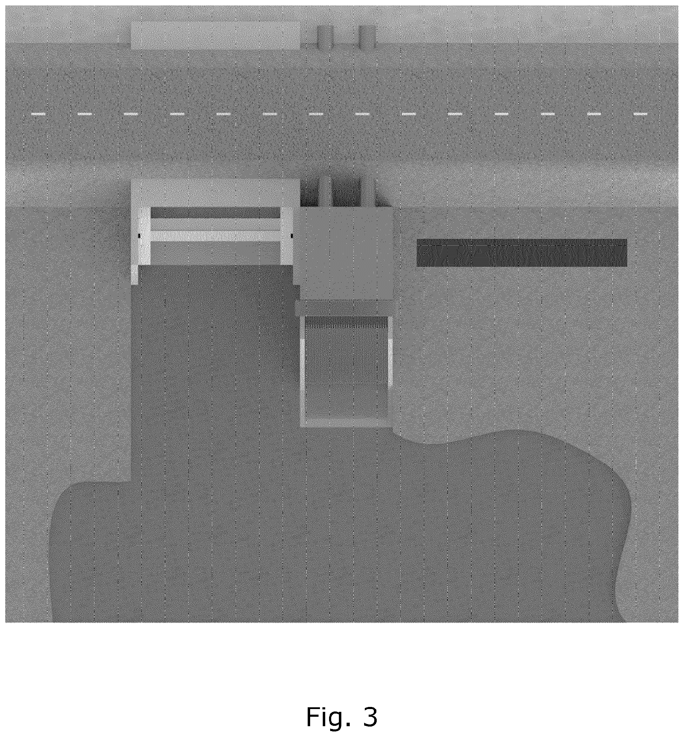

Figure 3 shows a bird's eye view of a pre-fabricated water control pump system in accordance with various embodiments of the invention.

Figure 4 shows the third module 130 alone. The third module 130 comprises two sluice gate members (mitre gate). Figure 4A shows the sluice gate member 500 in a closed position, and a Figure 4B shows the sluice gate member in an open position. The third module 130 comprises a pre-cast reinforced concrete frame 400, lifting anchors 430, two sluice gate members 500, and an actuator 600 adapted for moving the sluice gate members 500.

The pre-cast reinforced concrete frame 400 comprises two pre-cast reinforced concrete side panels 410, and a pre-cast reinforced concrete base panel 420 interconnecting the two side panels 410. The side base panel 410 is adapted for mounting the sluice gate members 500 thereto.

The base panel 420 is shown extending beyond the outer side/face of the side panels 410. Large stones may be placed on this part to keep the pre-cast reinforced concrete frame 130 in place.

A part of the base panel 420 is configured as a lower sluice gate member 422 extending between the two side panels 410.

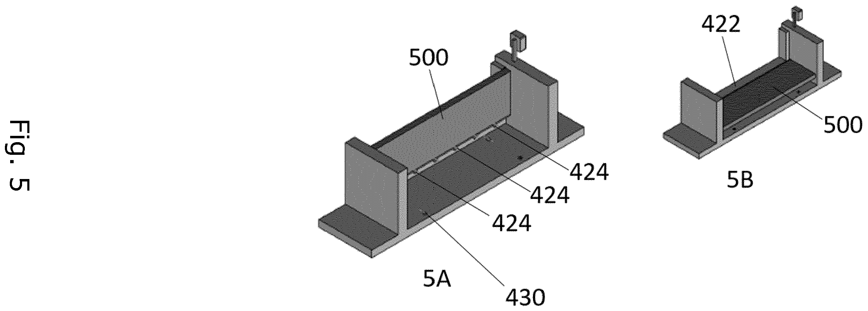

Figure 5 shows the third module 130 with one sluice gate member (flap gate) 500 in accordance with various embodiments of the invention.
Figure 5A shows the sluice gate member 500 in a closed position, and a Figure 5B shows the sluice gate member in an open position.

The pre-cast reinforced concrete base panel is configured as a lower sluice gate member 422 extending between the two side panels. The lower sluice gate member 422 comprises water/air channels 424 adapted to be connected to a source of water and/or compressed air. Water and/or compressed air may thereby be used to remove sediments blocking the function of the one or more sluice gate members.

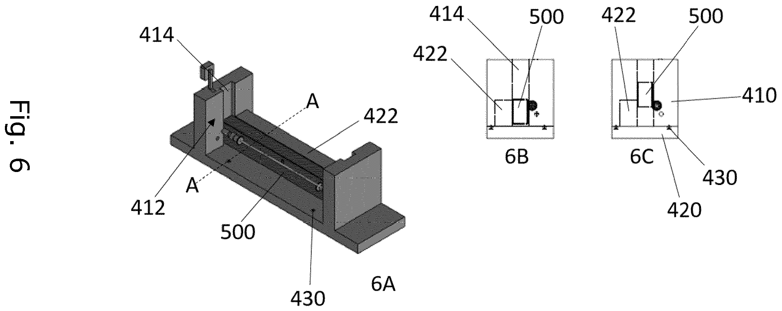

Figure 6 shows the third module 130 with one sluice gate member (vertical rising gate) in accordance with various embodiments of the invention. Figures 6A (perspective view) and 6B (cross-sectional view) show the sluice gate member 500 in an open position, while Figure 6C (cross-sectional view) shows the sluice gate member in a closed position.

The pre-cast reinforced concrete base panel is configured as a lower sluice gate member 422 extending between the two side panels.

The inner side/face 412 of the side panels each comprise a channel 414 configured for receiving a moving sluice gate member 500.

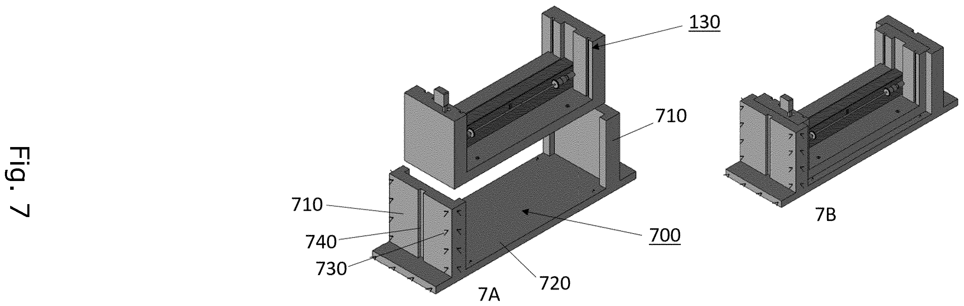

Figure 7 shows a casing 700 adapted for receiving the pre-cast reinforced concrete frame 400 in accordance with various embodiments of the invention. Figure 7A shows the pre-cast reinforced concrete frame 400 about to be inserted into the casing 700, and Figure 7B shows the pre-cast reinforced concrete frame inserted into the casing.

The casing 700 comprises two side panels 710 and a base panel 720. The base panel 720 is adapted for supporting the base panel 420 of the pre-cast reinforced concrete frame 400, and each side panel 710 is adapted for supporting a side panel 410 of the pre-cast reinforced concrete frame 400.

The reinforcement 730 extends beyond the side panels 710 of the casing 700, here shown beyond the front, back and outer face of the side panel. This will allow the pre-fabricated sluice gate system to be built into other reinforced concrete structures.

The outer face of the side panels each comprise a channel 740 configured for receiving a reinforcement plate adapted for being imbedded in the adjacent dam section.

### References

- 100: Modular pre-fabricated water control pump system
- 110: First module
- 120: Second module
- 130: Third module
- 200: First frame
- 210: Side panel
- 220: Base panel
- 230: Front panel
- 232: Grate
- 240: Lifting anchor or coupler adapted for receiving a lifting anchor
- 300: Second frame
- 310: Side panel
- 320: Base panel
- 330: Lifting anchor or coupler adapted for receiving a lifting anchor
- 340: Pump means
- 400: Third frame
- 410: Side panel
- 412: Inner side/face of the side panel
- 414: Channel
- 420: Base panel
- 422: Lower sluice gate member
- 400: Lifting anchor or coupler adapted for receiving a lifting anchor
- 500: Sluice gate member
- 600: Actuator
- 700: Casing
- 710: Side panel
- 720: Base panel
- 730: Reinforcement
- 740: Channel

## Claims

1. A modular pre-fabricated water control pump system (100) comprising:
a) A first module (110) comprising a first frame (200) comprising:
i. two side panels (210);
ii. a base panel (220) interconnecting the two side panels (210);
iii. a front panel (230) comprising a grate (232) adapted for retaining waterborne residues; and
iv. at least one lifting anchor (240) or coupler adapted for receiving a lifting anchor; and
b) A second module (120) comprising a second frame (300) comprising:
i. two side panels (310); and
ii. a base panel (320) interconnecting the two side panels (310);
iii. at least one lifting anchor (330) or coupler adapted for receiving a lifting anchor; and
iv. pump means (340);
**characterized in that** the modular pre-fabricated water control pump system (100) further comprises a third module (130) comprising:
a. a third frame (400) comprising:
i. two side panels (410); and
ii. a base panel (420) interconnecting the two side panels (410);
iii. at least one lifting anchor (430) or coupler adapted for receiving a lifting anchor;
b. one or more sluice gate members (500); and
c. an actuator (600) adapted for moving the one or more sluice gate members;
wherein the side (410) and/or base (420) panels are adapted for mounting the one or more sluice gate members (500) thereto.

2. The modular pre-fabricated water control pump system (100) according to claim 1, wherein at least a part of the side panel (310) of the second frame (300) is configured to be connected to at least a part of a side panel (210) of the first frame (200).

3. The modular pre-fabricated water control pump system according to any one of the claims 1-2, further comprising means adapted for removing waterborne residues from the grate (232).

4. The modular pre-fabricated water control pump system according to claim 3, further comprising a conveyor belt, and wherein the means adapted for removing waterborne residues from the grate (232) are adapted to transport the waterborne residues from the grate and onto the conveyor belt.

5. The modular pre-fabricated water control pump system according to any one of the claims 1-4, wherein the base panel of the first and/or second and/or third module extends beyond the side panels (210).

6. The modular pre-fabricated water control pump system according to claim 5, wherein the part of the base panel (220) extending beyond the side panels (210) comprises channels adapted for receiving an earth anchor.

7. The modular pre-fabricated water control pump system according to any one of the claims 1-6, wherein the modular pre-fabricated water control pump system further comprises means for measuring the water level in close proximity to the grate and/or the sluice gate member.

8. The modular pre-fabricated water control pump system according to claim 7, wherein the modular pre-fabricated water control pump system further comprises means for controlling the position of the sluice gate member and the activity of the pump means in response to the water level in close proximity to the grate and/or the sluice gate member.

9. The modular pre-fabricated water control pump system according to any one of the claims 1-8, wherein modular pre-fabricated water control pump system further comprises means for measuring the water level of a body of water in liquid communication with said system.

10. The modular pre-fabricated water control pump system according to claim 9, wherein the modular pre-fabricated water control pump system further comprises means for controlling the position of the sluice gate member and the activity of the pump means in response to the water level of a body of water in liquid communication with said system.

11. A method for segregating a body of water into two distinct parts with a pre-fabricated water control pump system comprising the steps of:
- sinking a pre-fabricated pump system according to any one of the claims 1-10 at a predetermined location in the body of water, wherein the side panels of the first (200) and the second (300) frame having been chosen so as to have sufficient height to protrude above the water level of the body of water after the pre-fabricated water control pump system is sunk at its predetermined location; and
- building a dam up against the outer face of the side panels.

12. A method according to claim 11, **characterized in that** the modular pre-fabricated water control pump system (100) further comprises means adapted for removing waterborne residues from the grate (232), and a conveyor belt; and wherein the means adapted for removing waterborne residues from the grate (232) are adapted to transport the waterborne residues from the grate and onto the conveyor belt.

13. A method according to any one of claims 11 and 12, **characterized in that** the modular pre-fabricated water control pump system (100) further comprises means for measuring the water level in close proximity to the grate and/or the sluice gate member, and means for controlling the position of the sluice gate member and the activity of the pump means in response to the water level in close proximity to the grate and/or the sluice gate member.

14. A method according to any one of the claims 11-13, **characterized in that** the modular pre-fabricated water control pump system (100) further comprises means for measuring the water level of a body of water in liquid communication with said system, and means for controlling the position of the sluice gate member and the activity of the pump means in response to the water level of a body of water in liquid communication with said system.

## Patentansprüche

1. Modulares vorgefertigtes Wassersteuerungspumpensystem (100), Folgendes umfassend:
a) ein erstes Modul (110), das einen ersten Rahmen (200) umfasst, der Folgendes umfasst:
i. zwei Seitenplatten (210);
ii. eine Bodenplatte (220), welche die beiden Seitenplatten (210) miteinander verbindet;
iii. eine Vorderplatte (230), die ein Gitter (232) umfasst, das zum Zurückhalten von wasserbasierten Rückständen ausgebildet ist; und
iv. mindestens einen Hebeanker (240) oder Koppler, der zum Aufnehmen eines Hebeankers ausgebildet ist; und
b) ein zweites Modul (120), das einen zweiten Rahmen (300) umfasst, der Folgendes umfasst:
i. zwei Seitenplatten (310);
ii. eine Bodenplatte (320), welche die beiden Seitenplatten (310) miteinander verbindet;
iii. mindestens einen Hebeanker (330) oder Koppler, der zum Aufnehmen eines Hebeankers ausgebildet ist; und
iv. Pumpmittel (340);
**dadurch gekennzeichnet, dass** das modulare vorgefertigte Wassersteuerungspumpensystem (100) ferner ein drittes Modul (130) umfasst, das Folgendes umfasst:
a. einen dritten Rahmen (400), umfassend:
i. zwei Seitenplatten (410); und
ii. eine Bodenplatte (420), welche die beiden Seitenplatten (410) miteinander verbindet;
iii. mindestens einen Hebeanker (430) oder Koppler, der zum Aufnehmen eines Hebeankers ausgebildet ist;
b. ein oder mehrere Schleusentorelemente (500); und
c. einen Aktor (600), der dazu ausgebildet ist, das eine oder die mehreren Schleusentorelemente zu bewegen; wobei die Seiten-(410) und/oder Boden- (420) Platten zum Montieren des einen oder der mehreren Schleusentorelemente (500) daran ausgebildet sind.

2. Modulares vorgefertigtes Wassersteuerungspumpensystem (100) nach Anspruch 1, wobei mindestens ein Teil der Seitenplatte (310) des zweiten Rahmens (300) dazu konfiguriert ist, mit mindestens einem Teil einer Seitenplatte (210) des ersten Rahmens (200) verbunden zu werden.

3. Modulares vorgefertigtes Wassersteuerungspumpensystem nach einem der Ansprüche 1 bis 2, ferner umfassend Mittel, die dazu ausgebildet sind, wasserbasierte Rückstände von dem Gitter (232) zu entfernen.

4. Modulares vorgefertigtes Wassersteuerungspumpensystem nach Anspruch 3, ferner umfassend ein Förderband, und wobei die zum Entfernen wasserbasierter Rückstände vom Gitter (232) ausgebildeten Mittel dazu ausgebildet sind, die wasserbasierten Rückstände vom Gitter und auf das Förderband zu transportieren.

5. Modulares vorgefertigtes Wassersteuerungspumpensystem nach einem der Ansprüche 1 bis 4, wobei die Bodenplatte des ersten und/oder zweiten und/oder dritten Moduls sich über die Seitenplatten (210) hinaus erstreckt.

6. Modulares vorgefertigtes Wassersteuerungspumpensystem nach Anspruch 5, wobei der Teil der Bodenplatte (220), der sich über die Seitenplatten (210) hinaus erstreckt, Kanäle umfasst, die zum Aufnehmen eines Erdankers ausgebildet sind.

7. Modulares vorgefertigtes Wassersteuerungspumpensystem nach einem der Ansprüche 1 bis 6, wobei das modulare vorgefertigte Wassersteuerungspumpensystem ferner Mittel zum Messen des Wasserstands in nächster Nähe zu dem Gitter und/oder dem Schleusentorelement umfasst.

8. Modulares vorgefertigtes Wassersteuerungspumpensystem nach Anspruch 7, wobei das modulare vorgefertigte Wassersteuerungspumpensystem ferner Mittel zum Steuern der Position des Schleusentorelements und der Aktivität der Pumpmittel als Reaktion auf den Wasserstand in nächster Nähe zu dem Gitter und/oder dem Schleusentorelement umfasst.

9. Modulares vorgefertigtes Wassersteuerungspumpensystem nach einem der Ansprüche 1 bis 8, wobei das modulare vorgefertigte Wassersteuerungspumpensystem ferner Mittel zum Messen des Wasserstands eines Gewässers in Flüssigkeitskommunikation mit dem System umfasst.

10. Modulares vorgefertigtes Wassersteuerungspumpensystem nach Anspruch 9, wobei das modulare vorgefertigte Wassersteuerungspumpensystem ferner Mittel zum Steuern der Position des Schleusentorelements und der Aktivität der Pumpmittel als Reaktion auf den Wasserstands eines Gewässers in Flüssigkeitskommunikation mit dem System umfasst.

11. Verfahren zum Trennen eines Gewässers in zwei getrennte Teile mit einem modularen vorgefertigten Wassersteuerungspumpensystem, das folgende Schritte umfasst:
- Absenken eines vorgefertigten Pumpensystems nach einem der Ansprüche 1 bis 10 an einer vorbestimmten Stelle in das Gewässer, wobei die Seitenplatten des ersten (200) und zweiten (300) Rahmens so ausgewählt wurden, dass sie hoch genug sind, um über dem Wasserstand des Gewässers herauszuragen, nachdem das vorgefertigte Wassersteuerungspumpensystem an der vorbestimmten Stelle abgesenkt wurde; und
- Bauen eines Staudamms gegen die Außenfläche der Seitenplatten.

12. Verfahren nach Anspruch 11, **dadurch gekennzeichnet, dass** das modulare vorgefertigte Wassersteuerungspumpensystem (100) ferner Mittel, die zum Entfernen wasserbasierter Rückstände vom Gitter (232) ausgebildet sind, und ein Förderband umfasst; und wobei die zum Entfernen wasserbasierter Rückstände vom Gitter (232) ausgebildeten Mittel dazu ausgebildet sind, die wasserbasierten Rückstände von dem Gitter und auf das Förderband zu transportieren.

13. Verfahren nach einem der Ansprüche 11 und 12, **dadurch gekennzeichnet, dass** das modulare vorgefertigte Wassersteuerungspumpensystem (100) ferner Mittel zum Messen des Wasserstands in nächster Nähe zu dem Gitter und/oder dem Schleusentorelement umfasst.

14. Verfahren nach einem der Ansprüche 11 und 13, **dadurch gekennzeichnet, dass** das modulare vorgefertigte Wassersteuerungspumpensystem (100) ferner Mittel zum Messen des Wasserstands eines Gewässers in Flüssigkeitskommunikation mit dem System und Mittel zum Steuern der Position des Schleusentorelements und der Aktivität der Pumpmittel als Reaktion auf den Wasserstand eines Gewässers in Flüssigkeitskommunikation mit dem System umfasst.

## Revendications

1. Système de pompe de commande d'eau préfabriqué modulaire (100) comprenant :
a) Un premier module (110) comprenant un premier bâti (200) comprenant :
i. deux panneaux latéraux (210) ;
ii. un panneau de base (220) reliant les deux panneaux latéraux (210) ;
iii. un panneau avant (230) comprenant une grille (232) conçue pour retenir les résidus en suspension dans l'eau ; et
iv. au moins une ancre de levage (240) ou un élément de couplage conçu pour recevoir une ancre de levage ; et
b) Un deuxième module (120) comprenant un deuxième bâti (300) comprenant :
i. deux panneaux latéraux (310) ; et
ii. un panneau de base (320) reliant les deux panneaux latéraux (310) ;
iii. au moins une ancre de levage (330) ou un élément de couplage conçu pour recevoir une ancre de levage ; et
iv. un moyen de pompage (340) ;
**caractérisé en ce que** le système de pompe de commande d'eau préfabriqué modulaire (100) comprend en outre un troisième module (130) comprenant :
a. un troisième bâti (400) comprenant :
i. deux panneaux latéraux (410) ; et
ii. un panneau de base (420) reliant les deux panneaux latéraux (410) ;
iii. au moins une ancre de levage (430) ou un élément de couplage conçu pour recevoir une ancre de levage ;
b. un ou plusieurs éléments de porte d'écluse (500) ; et
c. un actionneur (600) conçu pour déplacer le ou les éléments de porte d'écluse ; dans lequel les panneaux latéraux (410) et/ou de base (420) sont conçus pour monter le ou les éléments de porte d'écluse (500) sur ceux-ci.

2. Système de pompe de commande d'eau préfabriqué modulaire (100) selon la revendication 1, dans lequel au moins une partie du panneau latéral (310) du deuxième bâti (300) est conçue pour être reliée à au moins une partie d'un panneau latéral (210) du premier bâti (200).

3. Système de pompe de commande d'eau préfabriqué modulaire selon l'une quelconque des revendications 1 et 2, comprenant en outre des moyens conçus pour éliminer de la grille (232) les résidus en suspension dans l'eau.

4. Système de pompe de commande d'eau préfabriqué modulaire selon la revendication 3, comprenant en outre une bande transporteuse, et dans lequel les moyens conçus pour éliminer de la grille (232) les résidus en suspension dans l'eau sont conçus pour déplacer les résidus en suspension dans l'eau de la grille vers la bande transporteuse.

5. Système de pompe de commande d'eau préfabriqué modulaire selon l'une quelconque des revendications 1 à 4, dans lequel le panneau de base du premier et/ou du deuxième et/ou du troisième module s'étend au-delà des panneaux latéraux (210).

6. Système de pompe de commande d'eau préfabriqué modulaire selon la revendication 5, dans lequel la partie du panneau de base (220) s'étendant au-delà des panneaux latéraux (210) comprend des canaux conçus pour recevoir une ancre de terre.

7. Système de pompe de commande d'eau préfabriqué modulaire selon l'une quelconque des revendications 1 à 6, dans lequel le système de pompe de commande d'eau préfabriqué modulaire comprend en outre des moyens pour mesurer le niveau d'eau à proximité immédiate de la grille et/ou de l'élément de porte d'écluse.

8. Système de pompe de commande d'eau préfabriqué modulaire selon la revendication 7, dans lequel le système de pompe de commande d'eau préfabriqué modulaire comprend en outre des moyens pour commander la position de l'élément de porte d'écluse et l'activité du moyen de pompage en réponse au niveau d'eau à proximité immédiate de la grille et/ou de l'élément de porte d'écluse.

9. Système de pompe de commande d'eau préfabriqué modulaire selon l'une quelconque des revendications 1 à 8, dans lequel le système de pompe de commande d'eau préfabriqué modulaire comprend en outre des moyens pour mesurer le niveau d'eau d'une masse d'eau en communication liquide avec ledit système.

10. Système de pompe de commande d'eau préfabriqué modulaire selon la revendication 9, dans lequel le système de pompe de commande d'eau préfabriqué modulaire comprend en outre des moyens pour commander la position de l'élément de porte d'écluse et l'activité du moyen de pompage en réponse au niveau d'eau d'une masse d'eau en communication liquide avec ledit système.

11. Procédé de séparation d'une masse d'eau en deux parties distinctes à l'aide d'un système de pompe de commande d'eau préfabriqué comprenant les étapes suivantes :
- couler un système de pompe préfabriqué selon l'une quelconque des revendications 1 à 10 à un emplacement prédéterminé dans la masse d'eau, dans lequel les panneaux latéraux du premier bâti (200) et du deuxième bâti (300) ont été choisis de manière à avoir une hauteur suffisante pour dépasser le niveau d'eau de la masse d'eau après que le système de pompe de commande d'eau préfabriqué a été coulé à son emplacement prédéterminé ; et
- construire une digue contre la face extérieure des panneaux latéraux.

12. Procédé selon la revendication 11, **caractérisé en ce que** le système de pompe de commande d'eau préfabriqué modulaire (100) comprend en outre des moyens conçus pour éliminer de la grille (232) les résidus en suspension dans l'eau, et une bande transporteuse ; et dans lequel les moyens conçus pour éliminer de la grille (232) les résidus en suspension dans l'eau sont conçus pour déplacer les résidus en suspension dans l'eau de la grille vers la bande transporteuse.

13. Procédé selon l'une quelconque des revendications 11 et 12, **caractérisé en ce que** le système de pompe de commande d'eau préfabriqué modulaire (100) comprend en outre des moyens pour mesurer le niveau d'eau à proximité immédiate de la grille et/ou de l'élément de porte d'écluse, et des moyens pour commander la position de l'élément de porte d'écluse et l'activité du moyen de pompage en réponse au niveau d'eau à proximité immédiate de la grille et/ou de l'élément de porte d'écluse.

14. Procédé selon l'une quelconque des revendications 11 à 13, **caractérisé en ce que** le système de pompe de commande d'eau préfabriqué modulaire (100) comprend en outre des moyens pour mesurer le niveau d'eau d'une masse d'eau en communication liquide avec ledit système, et des moyens pour commander la position de l'élément de porte d'écluse et l'activité du moyen de pompage en réponse au niveau d'eau d'une masse d'eau en communication liquide avec ledit système.
